# EUROPEAN PATENT APPLICATION

(11) **EP 4 793 300 A1**
(43) Date of publication of application: **19.08.2026**
(21) Application number: 25158397.7
(22) Date of filing: 17.02.2025
(51) Int. Cl.: C08G 18/02, C08G 18/09, C08G 18/10, C08G 18/16, C08G 18/48, C08G 18/76, C08L 75/00

(54) **PHOSPHONIUM CATALYST FOR THE CURING OF ISOCYANATE POLYMERS**

(71) Applicant: Sika Technology AG, 6340 Baar (CH)
(72) Inventor: SCHLUMPF, Michael, 8048 Zürich (CH); CANNAS, Rita, 8048 Zürich (CH)
(74) Representative: Sika Patent Attorneys

(57) **Abstract**

The subject of the invention is the use of a catalyst containing at least one phosphonium cation and at least one aromatic carboxylate anion for the curing of an isocyanate-functional polymer with aromatic isocyanate groups and an NCO-content based on the total polymer of 0.5 to 5 weight-% by trimerisation of the isocyanate groups, a curable composition containing catalyst and the isocyanate-functional polymer, as well as the polyisocyanurate elastomer obtained from the inventive use or the inventive curable composition.

The inventive catalyst enables the preparation of polyisocyanurate elastomer with good working time at room temperature, fast curing upon heating to 80 °C, high elongation at high strength and improved dimensional stability after exposure to prolonged compression and heat. Such polyisocyanurate elastomers are particularly suitable for the use as shock absorbers for vehicles.

## Description

### Technical Field

The invention relates to a special phosphonium catalyst for the curing of isocyanate-functional polymers by trimerisation of the isocyanate groups.

### State of the art

Natural and synthetic rubber is obtained through vulcanization, leading to durable elastomers. Rubber has a low glass transition temperature and a good dimensional stability with a high elastic recovery after pressure. Among other uses, rubber is particularly suitable for elastic seals or dampening materials, for example as a component of shock absorbers in vehicle construction. Over time, however, rubber tends to become brittle due to oxidation by air and loses its elasticity, which means that the rubber has to be replaced regularly. Hence, there is a need for an elsastomer with rubber-like properties which does not tend to become brittle over time. WO 2024/052537 describes polyisocyanurate plastics with rubber-like properties from compositions based on an isocyanate-functional polyether polymer which is cured by trimerisation of the isocyanate groups, whereby ammonium-based catalysts were used for the curing reaction. Compositions with aromatic isocyanate groups enabled particularly tough, durable plastics, but they require an unfavorably long curing time at 80 °C.

WO 2010/054313 describes a catalyst system with a phosphonium catalyst for the trimerisation of isocyanates. The examples use phosphonium acetate catalysts and polymeric diphenylmethane diisocyanate for the production of rigid foams.

US 2002/0177666 describes the curing of fluoro polymers, whereby a phosphonium benzoate is used as curing catalyst.

### Summary of the invention

The task of this invention is to provide a catalyst for the curing of isocyanate-functional polymers with aromatic isocyanate groups by trimerisation of the isocyanate groups, which overcomes the drawbacks of state-of-the-art catalysts for this use in terms of cure temperature, cure speed and mechanical properties of the obtained elastomers, particularly in terms of dimensional stability after exposure to prolonged compression and heat.

This task is surprisingly achieved by the use of a catalyst containing at least one phosphonium cation and at least one aromatic carboxylate anion for the curing of an isocyanate-functional polymer with aromatic isocyanate groups by trimerisation of the isocyanate groups, as described in claim 1.

The inventive catalyst use enables a curing behaviour with a long working time at room temperature together with fast curing properties, for example within 30 minutes at 80 °C. A phosphonium catalyst with an aliphatic carboxylate anion such as a phosphonium acetate causes an immediate curing upon mixing of the catalyst with the isocyanate-functional polymer at room temperature without providing a reasonable working time, and a phosphonium chloride catalyst is not active enough to cure the isocyanate-functional polymer within two days at 100 °C, as can be seen from Table 1 of the experiments.

In addition to the advantageous curing properties, the inventive catalyst use enables an elastomer with good mechanical properties, particularly a high elongation at high strength, together with an improved dimensional stability after prolonged compression at 70 °C compared to corresponding elastomers cured with similar catalysts such as ammonium formates or acetates, as can be seen from Table 2 of the experiments.

The inventive catalyst use enables the manufacturing of highly elastic polyisocyanurate elastomers with a high tolerance towards mixing errors upon addition of the catalyst, without the need of water for the curing, and without the release of substances upon cure, which enables the application in high layer thicknesses and in closed environments.

The obtained polyisocyanurate elastomers have beneficial rubber-like properties with a high dimensional stability without getting brittle over time. They are highly suitable for applications where elastic materials are needed with long-term vibration-dampening properties, such as shock absorbing elastomers, particularly for encasing the steel springs of shock absorbers of vehicles. Their favorable application and curing properties combined with longevity enable considerable sustainability benefits as well as cost savings.

Other aspects of the invention are described in other independent claims. Preferred aspects of the invention are described in dependent claims.

### Detailed description of the invention

The subject of the invention is the use of a catalyst containing at least one phosphonium cation and at least one aromatic carboxylate anion for the curing of an isocyanate-functional polymer with aromatic isocyanate groups and an NCO-content based on the total polymer of 0.5 to 5 weight-% by trimerisation of the isocyanate groups.

In this document, the term "NCO-content" refers to the content of isocyanate groups in weight-%.

In this document, the term "weight-%" or "wt.%" refers to the mass fraction of a constituent of a composition based on the entire composition, unless stated otherwise. The terms "weight" and "mass" are used synonymously in this document.

In this document, "room temperature" refers to a temperature of 23°C.

In this document, an "aromatic carboxylate anion" is the anion of a carboxylic acid, in which the carboxylic group is directly linked to an aromatic moiety, as for example in benzoic acid.

In this document, an "aromatic isocyanate group" is an isocyanate group, which is directly linked to an aromatic moiety, as for example in phenylisocyanate.

In this document, substance names beginning with "poly" such as polyol or polyisocyanate, refer to substances containing two or more of the functional groups occurring in their name.

In this document, the term "shelf life stability" refers to the ability of a composition to be stored at room temperature in a suitable container under exclusion of moisture for a certain time interval, in particular several months, without undergoing significant changes in application or end-use properties.

In this document, the term "working time" refers to the time period, during which a multi-component composition can be applied after mixing of the components without defects.

In this document, the term "molecular weight" refers to the molar mass (g/mol) of a molecule. The term "average molecular weight" refers to the number average molecular weight (Mₙ) of an oligomeric or polymeric mixture of molecules. It is determined by means of gel permeation chromatography (GPC) against polystyrene as the standard, particularly with tetrahydrofuran as the mobile phase and a refractive index detector.

All industry standards and norms mentioned in this document refer to the versions valid at the time of filing the first application, if not specified otherwise.

The phosphonium cation preferably comprises a minimum of 22 carbon atoms, more preferably a minimum of 24 carbon atoms, particularly a minimum of 26 carbon atoms. Such a catalyst is typically liquid at room temperature and can be used without the addition of solvents. Preferably, the phosphonium cation comprises 22 to 60 carbon atoms, more preferably 24 to 50 carbon atoms, particularly 26 to 40 carbon atoms.

The carbon atoms of the phosphonium cation are preferably part of an alkyl, a cycloalkyl or an aryl group, whereby these groups are optionally substituted.

The phosphonium cation is preferably a phosphonium cation of the formula (I), 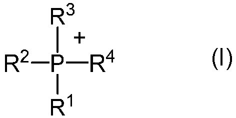 wherein R¹, R², R³ and R⁴ each individually is a monovalent C₁ to C₂₀ alkyl, cycloalkyl or aryl group, whereby R¹, R², R³ and R⁴ together contain 22 to 60 carbon atoms, preferably 24 to 50 carbon atoms, particularly 26 to 40 carbon atoms.

Preferably, R¹, R², R³ and R⁴ are each individually selected from the list consisting of methyl, ethyl, propyl, butyl, hexyl, octyl, decyl, dodecyl, tetradecyl, hexadecyl, octadecyl, cyclohexyl and phenyl, whereby all possible isomers are included in this list.

Preferred thereof is butyl, hexyl, octyl, decyl, dodecyl, tetradecyl, hexadecyl or octadecyl, particularly hexyl, octyl, decyl, dodecyl, tetradecyl or hexadecyl.

Preferably, R¹, R² and R³ have the same meaning, which is preferably butyl, hexyl or octyl, particularly hexyl.

A preferred phosphonium cation is selected from the list consisting of tributyl-decylphosphonium, tributyl-dodecylphosphonium, tributyl-tetradecylphosphonium, tributyl-octadecylphosphonium, tetrahexylphosphonium, trihexyl-octylphosphonium, trihexyl-decylphosphonium, trihexyl-dodecylphosphonium, trihexyl-tetradecylphosphonium, trihexyl-hexadecylphosphonium, trihexyl-octadecylphosphonium, tetraoctylphosphonium, trioctyl-decylphosphonium, trioctyl-dodecylphosphonium, trioctyl-tetradecylphosphonium, trioctyl-hexadecylphosphonium and trioctyl-octadecylphosphonium.

Preferred thereof is trihexyl-decylphosphonium, trihexyl-dodecylphosphonium, trihexyl-tetradecylphosphonium, trihexyl-hexadecylphosphonium or tetraoctylphosphonium.

Such catalysts are typically liquid at room temperature.

Suitable aromatic carboxylate anions are preferably derived from commercially available aromatic carboxylic acids.

The aromatic carboxylate anion is preferably selected from the list consisting of benzoate, the isomeric hydroxybenzoates, the isomeric dihydroxybenzoates, 2,4,6-trihydroxybenzoate, the isomeric toluates, the isomeric ethylbenzoates, the isomeric isopropylbenzoates, the isomeric dimethylbenzoates, the isomeric vinylbenzoates and the isomeric naphthoates.

Preferred thereof is benzoate, salicylate, 3-hydroxybenzoate, 4-hydroxybenzoate, o-toluate, m-toluate, p-toluate, particularly preferred is benzoate or salicylate, most preferred is benzoate.

Preferably, the catalyst contains or consists of a salt selected from the list consisting of trihexyl-decylphosphonium benzoate, trihexyl-dodecylphosphonium benzoate, trihexyl-tetradecylphosphonium benzoate, trihexyl-hexadecylphosphonium benzoate, trihexyl-octadecylphosphonium benzoate, tetraoctylphosphonium benzoate, trihexyl-decylphosphonium salicylate, trihexyl-dodecylphosphonium salicylate, trihexyl-tetradecylphosphonium salicylate, trihexyl-hexadecylphosphonium salicylate, trihexyl-octadecylphosphonium salicylate and tetraoctylphosphonium salicylate.

Preferred thereof are the benzoates, particularly trihexyl-tetradecylphosphonium benzoate.

The catalyst can be prepared from commercially available phosphonium chlorides, phosphonium bromides or phosphonium fluorides by reaction with the corresponding aromatic carboxylate, preferably in the form of a sodium or potassium carboxylate, followed by washing out sodium chloride or potassium chloride, or the corresponding bromide or fluoride, respectively.

Upon such a preparation, the obtained reaction product may contain some remaining phosphonium chloride, bromide or fluoride, together with the obtained phosphonium carboxylate.

Preferably, the catalyst is prepared from a phosphonium chloride, particularly from trihexyl tetradecyl phosphonium chloride, which is commercially available, for example as Cyphos^{®} IL 101 (from Syensqo).

Preferably, the catalyst is mostly free of solvents such as water or organic solvents. Particularly, the catalyst is mostly free of water and mostly free of volatile organic solvents with a boiling point at atmospheric pressure below 250 °C, and mostly free of organic solvents containing primary hydroxyl groups, whereby the term "mostly free" particularly means a content below 1 weight-%, preferably below 0.1 weight-%, based on the total catalyst.

Preferably, the catalyst is used in such an amount, that the weight ratio between the catalyst and the isocyanate-functional polymer is 0.25/100 to 2.5/100, preferably 0.5/100 to 2/100, more preferably 0.75/100 to 1.5/100. Such an amount enables a good working time at room temperature and a fast curing with only moderate heating.

The inventive catalyst is used for the curing of an isocyanate-functional polymer with aromatic isocyanate groups and an NCO-content based on the total polymer of 0.5 to 5 weight-%.

Preferably, the isocyanate-functional polymer contains polyether chains and/or polyester chains and/or polyhydrocarbon chains such as for example polybutadiene chains.

Particularly, the isocyanate-functional polymer contains polyether chains, preferably polyether chains with oxy-1,2-propylene or with oxy-1,4-butylene units. Preferred are poly(oxy-1,2-propylene) chains or poly(oxy-1,2-propylene) chains which may be endcapped with a certain amount of oxyethylene units. Such a polymer is typically liquid at room temperature with good handling properties and allows a high elasticity after curing.

The isocyanate-functional polymer is preferably liquid at room temperature. It has preferably a viscosity of 1 to 100 Pa·s, more preferably 2 to 50 Pa·s, particularly 3 to 25 Pa·s, determined at 20 °C with a cone-plate rheometer with a cone diameter of 25 mm, cone angle of 1° at a cone-plate-distance of 0.05 mm at a shear rate of 10 s⁻¹.

Preferred are linear isocyanate-functional polymers or branched isocyanate-functional polymers, particularly with an isocyanate functionality between 2 and 3.

The aromatic isocyanate groups of the isocyanate-functional polymer are preferably derived from commercially available monomeric aromatic diisocyanates, such as particularly the isomeric diphenylmethane diisocyanates (MDI), the isomeric toluene diisocyanates (TDI), the isomeric phenylene diisocyanates (PDI) or naphthalene-1,5-diisocyanate (NDI). Preferred thereof are MDI or TDI.

Particularly, the aromatic isocyanate groups of the isocyanate-functional polymer are from a diphenylmethane diisocyanate, preferably from 4,4'-diphenylmethane diisocyanate. This enables elastic products of high toughness and durability.

Preferably, the NCO-content of the isocyanate-functional polymer is 0.7 to 4 weight-%, more preferably 1 to 3.5 % weight-%, particularly 1.5 to 3 % weight-%, based on the total polymer. Such a polymer is storage stable under exclusion of moisture and allows cured products of high elasticity.

Preferably, the isocyanate-functional polymer has an average molecular weight Mₙ of 2'000 to 20'000 g/mol, more preferably 3'000 to 15'000 g/mol, particularly 4'000 to 10'000 g/mol.

A suitable isocyanate functional polymer is preferably obtained from the reaction of at least one monomeric aromatic diisocyanate and at least one polymeric polyol.

Suitable monomeric aromatic diisocyanates are the ones already mentioned, preferably MDI or TDI, particularly 4,4'-diphenylmethane diisocyanate.

Suitable polymeric polyols are polyether polyols, polyester polyols, polyhydrocarbon polyols, particularly polybutadiene polyols, and mixtures thereof.

Preferred are polyether polyols, particularly poly(oxy-1,4-butylene) diols, poly(oxy-1,2-propylene) diols or poly(oxy-1,2-propylene) triols, which are optionally endcapped with an amount of up to 20 weight-% of oxyethylene units based on the total polyol. The triols are preferably started from glycerol or 1,1,1-trimethylolpropane.

Preferred are diols or triols with an OH-number of 9 to 56 mg KOH/g, preferably 14 to 40 mg KOH/g, particularly 18 to 32 mg KOH/g.

The isocyanate-functional polymer is preferably prepared by combining the monomeric aliphatic diisocyanate and at least one polymeric polyol in a molar NCO/OH ratio of at least 1.3, preferably at least 1.5, more preferably at least 1.8, in the absence of moisture at a temperature in the range of 20 to 160 °C, preferably 40 to 140 °C, optionally in the presence of a suitable catalyst.

A particularly preferred isocyanate-functional polymer has a content of monomeric diisocyanate, in relation to the total polymer, of below 0.2 weight-%, preferably below 0.1 weight-%. Such a low monomer isocyanate-functional polymer allows curable compositions which are safe to use without special protective measures and do not require hazard labelling.

For such a polymer, the reaction is preferably conducted at a molar NCO/OH ratio of at least 3/1, preferably 3/1 to 10/1, particularly 3/1 to 8/1, followed by the removal of most of the remaining monomeric diisocyanate by a distillation process, preferably by thin film distillation or short path distillation under vacuum.

The inventive catalyst is used for the curing of the isocyanate-functional polymer by trimerisation of the isocyanate groups.

Preferably, the curing is done by mixing the catalyst and the isocyanate-functional polymer, preferably followed by heating the mixture to a temperature above 40 °C, particularly above 60 °C. The inventive catalyst provides a long working time upon mixing at room temperature, together with a fast curing at only moderate heating. Preferred is a curing temperature of 15 to 120 °C, preferably 40 to 100 °C, particularly 60 to 100 °C, preferably for a time period of 5 minutes to 24 hours, particularly 10 minutes to 2 hours.

Particularly preferred is curing at 80 °C for 30 minutes.

For the inventive use, the isocyanate-functional polymer may be part of a composition containing further ingredients, particularly fillers, plasticizers, drying agents and further ingredients which are typically used in the polyurethane industry. Such compositions are explained in more detail below.

Another subject of the invention is a curable composition comprising the catalyst containing at least one phosphonium cation and at least one aromatic carboxylate anion as described above, and at least one isocyanate-functional polymer with aromatic isocyanate groups and an NCO-content of 0.5 to 5 weight-% as described above, and at least one further ingredient selected from the list consisting of fillers, plasticizers and drying agents.

Suitable fillers are particularly ground or precipitated calcium carbonates (chalk), which are optionally surface coated with a fatty acid such as a stearate, barium sulfate (barytes), slate, silicates (quartz), magnesiosilicates (talc), alumosilicates (clay, kaolin), dolomite, mica, glass bubbles, silicic acid, particularly highly dispersed silicic acids from pyrolytic processes (fumed silica), carbon black, graphite, microspheres, pigments, particularly titanium dioxide or iron oxides, calcium oxide, calcium hydroxide, aluminium oxide, aluminium hydroxide, boron nitride, aluminium nitride, magnesium oxide, magnesium hydroxide, zinc oxide, antimony trioxide, antimony pentoxide, boric acid, zinc borate, zinc phosphate, melamine borate, melamine cyanurate, ethylenediamine phosphate, ammonium polyphosphate, dimelamine orthophosphate, dimelamine pyrophosphate, hexabromocyclododecane, decabromodiphenyl oxide or tris(bromoneopentyl) phosphate.

Preferred fillers are calcium carbonates, barium sulfates, slate, silicates, magnesiosilicates, alumosilicates, dolomite, mica, fumed silica, carbon black, graphite, titanium dioxide, calcium oxide, calcium hydroxide, aluminium oxide, aluminium hydroxide, boron nitride, aluminium nitride, magnesium oxide, magnesium hydroxide, zinc oxide or any mixture of these fillers.

Particularly preferred is carbon black.

Suitable plasticizers are particularly phthalates, particularly diisononyl phthalate (DINP) or diisodecyl phthalate (DIDP), hydrogenated phthalates, particularly hydrogenated DINP, which is diisononyl-1,2-cyclohexane dicarboxylate (DINCH), terephthalates, particularly bis(2-ethylhexyl) terephthalate (DEHT) or diisononyl terephthalate (DINT), hydrogenated terephthalates, particularly bis(2-ethylhexyl)-1,4-cyclohexane dicarboxylate, trimellitates, adipates, particularly dioctyl adipate (DOA), azelates, sebacates, citrates, benzoates, glycol ethers, glycol esters such as triethylene glycol bis(2-ethylhexanoate), polyether monols or polyether polyols with blocked hydroxyl groups particularly in the form of acetat groups, organic sulfonates or phosphates, particularly diphenylcresyl phosphate (DPK) or tris(2-ethylhexyl) phosphate (TOP), polybutenes, polyisobutenes or plasticizers obtained from natural fats or oils such as epoxidized soy or linseed oil.

Preferred plasticizers are phthalates, hydrogenated phthalates, terephthalates, hydrogenated terephthalates, adipates or plasticizers with a polyether backbone.

Suitable drying agents are particularly molecular sieves, calcium oxide, highly reactive isocyanates such as p-tosylisocyanate, mono-oxazolidines such as Incozol^{®} 2 (from Incorez) or orthoformic acid esters.

Preferred are molecular sieves or calcium oxide.

The curable composition may contain further ingredients, particularly
- oligomeric polyisocyanates such as a biuret or isocyanurate or uretdione or iminooxadiazinedione or allophanate of 1,6-hexanediisocyanate (HDI), an isocyanurate of isophorondiisocyanate (IPDI), an isocyanurate of PDI or a mixed isocyanurate based on TDI and HDI, preferably an isocyanurate of HDI,
- adhesion promoters, particularly organoalkoxy silanes such as 3-isocyanatopropyltrimethoxysilane, 3-isocyanatopropyltriethoxysilane, 3-glycidoxypropyltrimethoxysilane, 3-glycidoxypropyltriethoxysilane, (meth)acrylosilanes, anhydrido-silanes, carbamatosilanes, alkylsilanes or iminosilanes, or oligomers thereof, or titanates,
- pigments and/or dyes,
- fibres, particularly glass fibres, carbon fibres, metallic fibres, ceramic fibres, plastic fibres, particularly polyamide fibres or polyethylene fibres, or natural fibres such as wool, cellulose, hemp or sisal,
- nanofillers such as graphene or carbon nanotubes,
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes,
- organic solvents,
- additives such as stabilizers against UV or heat or antioxidants, wetting agents, flow enhancers, leveling agents, defoamers, deaerating agents or biocides.

Preferably, the curable composition contains based on the total composition
- 40 to 70 weight-% of the described isocyanate-functional polymer,
- 20 to 50 weight-% of carbon black,
- 0 to 30 weight-%, preferably 5 to 20 weight-%, of plasticizers, and
- 0.05 to 2 weight-%, preferably 0.1 to 1 weight-%, of the inventive catalyst.

The curable composition is preferably packed and stored in two separate components.

The first component, which is also called "Isocyanate Component", contains the described isocyanate-functional polymer, and the second component, also called "Catalyst Component", contains the described catalyst. Other ingredients of the composition may be part of the first and/or the second component. Ingredients with isocyanate groups are contained in the first component.

A typical composition contains most of the further ingredients as part of the first component, whereas some of the further ingredients are preferably part of the second component in order to achieve a beneficial consistency and a beneficial mixing ratio between the two components.

Each component is prepared by mixing all ingredients under exclusion of moisture to obtain a macroscopically homogeneous fluid or paste and separately packed and stored in a moisture-tight container at ambient temperatures. A suitable moisture-tight container is preferably a bucket, a barrel, a hobbock, a bag, a sausage, a cartridge, a can, a bottle or a tube. With suitable packaging and storage, each component shows a good shelf life stability.

For the application of the curable composition, the inventive catalyst is mixed with the isocyanate-functional polymer. If the curable composition is packed in two separate components, the two components are mixed with each other by a suitable method, preferably by a static or a dynamic mixing procedure.

Mixing and application of the curable composition is preferably done at ambient temperatures, preferably at 5 to 40 °C, more preferably 10 to 35 °C, particularly 15 to 30 °C.

Upon mixing, the inventive catalyst gets in contact with the described isocyanate-functional polymer, whereby the curing by trimerisation of the isocyanate groups starts. The curing can also take place at ambient conditions, or is preferably completed by heating to a temperature of 40 to 100 °C, particularly 60 to 100 °C.

Isocyanurate groups are formed upon trimerisation of the isocyanate groups. The cured composition is therefore also called a "polyisocyanurate elastomer".

The mixed composition has a long working time, which means there is enough time to bring the mixed, still fluid or pasty composition in the right position before it starts to become highly viscous and finally gels. Upon heating, final curing takes place quickly, for example within several minutes to 2 hours at 80 °C, preferably within 30 minutes at 80 °C, depending on the specific type and amount of catalyst which was used.

Upon curing, some side reactions may also occur, for example reactions of isocyanate groups with water to form urea groups, whereby carbon dioxide is released, or the formation of an asymmetrical trimer with iminooxadiazinedione groups.

Preferably, the mixed composition is applied in such a way that virtually its whole surface is covered by moisture-tight substrates, protecting the composition from significant contact with atmospheric moisture while curing.

Another subject of the invention is the polyisocyanurate elastomer obtained
- from the described use by mixing the inventive catalyst with the described isocyanate-functional polymer, or
- from the described curable composition by mixing the ingredients, particularly the two separately packed components,

followed by curing the mixed composition at a temperature of 5 to 140 °C, preferably 15 to 120 °C, more preferably 40 to 100 °C, particularly 60 to 100 °C.

The cured polyisocyanurate elastomer is elastic with rubber-like properties. It has a high elongation and high tensile strength, together with a good dimensional stability after prolonged compression at 70 °C.

Preferably, the cured polyisocyanurate elastomer has an elongation at break of at least 100 %, particularly at least 150 %.

Preferably, the cured polyisocyanurate elastomer has a tensile strength of at least 3 MPa, more preferably at least 5 MPa, particularly at least 7 MPa.

The elongation at break and the tensile strength are determined according to DIN EN 53504 at a crosshead speed of 200 mm/min with dumbbell-shaped samples with a thickness of 2 mm and length of 75 mm at a bridge length of 30 mm and a bridge width of 4 mm.

Preferably, the cured polyisocyanurate elastomer has a deformation after compression at 70 °C of less than 50 %, preferably less than 40 %, particularly less than 30 %, determined with a cylindrical sample of 13 mm in diameter and 6 mm in height after compressing the sample by 25 % in height to 4.5 mm at 70 °C for 94 hours, followed by cooling the compressed sample to room temperature, releasing the pressure and measuring the loss in height in % based on the compressed height of 1.5 mm.

Such a high dimensional stability allows the use of the cured polyisocyanurate elastomer for applications where elastic materials are needed with vibration-dampening properties, such as shock absorbing elastomers, particularly for encasing the steel springs of shock absorbers of vehicles.

### Examples

The following examples illustrate the present invention without being limiting. "Standard climate conditions" means a temperature of 23±1 °C and a relative atmospheric moisture of 50±5% and is abbreviated with "SCC".

Chemical substances not otherwise specified are from Sigma-Aldrich Chemie GmbH and were used as obtained.

### Preparation of isocyanate-functional polymers:

The **NCO-content** was determined by reaction with a molar excess of dibutylamine and back titration of the remaining dibutylamine with aqueous hydrochloric acid.

The **viscosity** was measured with a thermostated cone-plate-viscometer Rheotec RC30 (cone diameter 50 mm, cone angle 1 °, cone-plate-distance 0.05 mm, shear rate 10 s⁻¹).

The **content of monomeric diisocyanates** was determined with HPLC (detection by photodiode array; 0.04 M sodium acetate / acetonitrile mobile phase) after derivatization with N-propyl-4-nitrobenzylamine.

### Polymer P1

725.0 g of an ethyleneoxide-terminated polyoxypropylene triol (OH-number 28 mg KOH/g, Desmophen^{®} 5031 BT from Covestro) and 275 g 4,4'-diphenylmethane diisocyanate (Desmodur^{®} 44 MC L, from Covestro) were reacted at 80 °C according to known procedures to form a mixture with an NCO-content of 7.6 weight-%. The volatile contents, particularly most of the monomeric 4,4'-diphenylmethane diisocyanate, were then removed from the mixture in a short path evaporator by distillation (jacket temperature 180 °C, 0.1 to 0.005 mbar), whereby a polymer with aromatic isocyanate groups, an NCO-content of 1.7 weight-%, a viscosity of 19 Pa·s at 20 °C and a content of monomeric 4,4'-diphenylmethane diisocyanate of 0.04 weight-% was obtained.

### Polymer P2

727 g of a polyoxypropylene diol (OH-number 28 mg KOH/g, Acclaim^{®} 4200 from Covestro) and 273 g 4,4'-diphenylmethane diisocyanate (Desmodur^{®} 44 MC L, from Covestro) were reacted at 80 °C according to known procedures to form a mixture with an NCO-content of 7.6 weight-%. The volatile contents, particularly most of the monomeric 4,4'-diphenylmethane diisocyanate, were then removed from the mixture in a short path evaporator by distillation (jacket temperature 180 °C, 0.1 to 0.005 mbar), whereby a polymer with aromatic isocyanate groups, an NCO-content of 1.7 weight-%, a viscosity of 15 Pa·s at 20 °C and a content of monomeric 4,4'-diphenylmethane diisocyanate of 0.08 weight-% was obtained.

### Polymer P3

780 g of an ethyleneoxide-terminated polyoxypropylene triol (OH-number 28 mg KOH/g, Desmophen^{®} 5031 BT from Covestro) and 303 g isophorone diisocyanate (Vestanat^{®} IPDI, from Evonik) were reacted at 80 °C according to known procedures to form a mixture with an NCO-content of 9.1 weight-%. The volatile contents, particularly most of the monomeric isophorone diisocyanate, were then removed from the mixture in a short path evaporator by distillation (jacket temperature 160 °C, 0.1 to 0.005 mbar), whereby a polymer with aliphatic isocyanate groups, an NCO-content of 1.8 weight-%, a viscosity of 8.2 Pa·s at 20 °C and a content of monomeric isophorone diisocyanate of 0.02 weight-% was obtained.

The Polymer **P1** and Polymer **P2** both contain aromatic isocyanate groups. The Polymer **P3** contains aliphatic isocyanate groups and is for reference purpose.

### Preparation of compositions cured by trimerisation of isocyanate groups:

### Used catalysts

| | |
|---|---|
| PH-CL | trihexyl-tetradecylphosphonium chloride (Cyphos^{®} IL 101, from Syensqo) |
| PH-Bz | trihexyl-tetradecylphosphonium benzoate, prepared as given below |
| PH-Sa | trihexyl-tetradecylphosphonium salicylate, prepared as given below |
| PH-Ac | trihexyl-tetradecylphosphonium acetate, prepared as given below |
| AM-Fo | trimethyl-2-hydroxypropylammonium formate (DABCO^{®} TMR-2, from Evonik) |
| AM-Ac | tetraethylammoniumacetate |

**¹H-NMR spectra** were measured on a Bruker Ascend 400 spectrometer at 400.14 MHz. The chemical shifts δ are reported in ppm relative to tetramethylsilane (TMS). No distinction is made between true and pseudo-coupling patterns.

**PH-Bz** was prepared by dissolving 5.2 g (10.0 mmol) of trihexyl-tetradecylphosphonium chloride (Cyphos^{®} IL 101, from Syensqo) and 1.5 g (10.4 mmol) of sodium benzoate in 30 mL methanol and stirring at room temperature. After 4 hours, the solid precipitate formed (sodium chloride) was filtered off and the filtrate was freed from the volatile contents under vacuum. Obtained were 4.4 g of a colorless clear oil, which contained about 75 mol-% of trihexyl-tetradecylphosphonium benzoate and 25 mol-% of trihexyl-tetradecylphosphonium chloride, determined by ¹H-NMR according to the relative height of the benzoate peak (7.83-7.81 ppm) and the CH₂-P peak (2.22-2.14 ppm).
¹H-NMR (DMSO-D₆): 7.83-7.81 (m, 2 H, ar-H), 7.29-7.27 (m, 3 H, ar-H), 2.22-2.14 (m, 8 H, CH₂-P), 1.48-1.25 (m, 56 H, CH₂), 0.90-0.84 (m, 17 H, CH₃)

**PH-Sa** was prepared by dissolving 10.0 g (19.3 mmol) of trihexyl-tetradecylphosphonium chloride (Cyphos^{®} IL 101, from Syensqo) in a solution of 2.73 g (19.8 mmol) of salicylic acid and 0.79 g (19.8 mmol) of sodium hydroxide in 50 mL of methanol and stirring at room temperature. After 4 hours, the solid precipitate formed (sodium chloride) was filtered off and the filtrate was freed from the volatile contents under vacuum. Obtained were 11.4 g of a colorless clear oil, which contained about 75 mol-% of trihexyl-tetradecylphosphonium salicylate and 25 mol-% of trihexyl-tetradecylphosphonium chloride, determined by ¹H-NMR according to the relative height of the salicylate peak (7.85 ppm) and the CH₂-P peak (2.23-2.16 ppm).
¹H-NMR (DMSO-D₆): 7.85 (m, 1 H, ar-H), 7.18-7.16 (m, 1 H, Ar-H), 6.76 (d, 1 H, ar-H), 6.66 (t, 1 H, ar-H), 2.23-2.16 (m, 8 H, CH₂-P), 1.43-1.17 (m, 56 H, CH₂), 0.83-0.79 (m, 17 H, CH₃)

**PH-Ac** was prepared by dissolving 3.7 g (7.1 mmol) of trihexyl-tetradecylphosphonium chloride (Cyphos^{®} IL 101, from Syensqo) and 0.59 g (7.2 mmol) of sodium acetate in 20 mL methanol and stirring at room temperature. After 4 hours, the solid precipitate formed (sodium chloride) was filtered off and the filtrate was freed from the volatile contents under vacuum. Obtained were 3.7 g of a colorless clear oil, which contained about 79 mol-% of trihexyl-tetradecylphosphonium acetate and 21 mol-% of trihexyl-tetradecylphosphonium chloride, determined by ¹H-NMR according to the relative height of the acetate peak (1.55 ppm) and the CH₂-P peak (2.24-2.18 ppm).
¹H-NMR (DMSO-D₆): 2.24-2.18 (m, 8 H, CH₂-P), 1.55 (s, 3 H, CH₃-ac) 1.48-1.25 (m, 56 H, CH₂), 0.90-0.84 (m, 17 H, CH₃)

**PH-Bz** and **PH-Sa** are phosphonium catalysts according to the invention. The other catalysts are for reference purpose.

### Compositions C-1 to C-5:

For each composition, 50 g of the isocyanate-functional polymer as given in Table 1 were mixed with 0.5 g of the catalyst as given in Table 1 by means of a centrifugal mixer (SpeedMixer^{™} DAC 150, FlackTek Inc.) under exclusion of moisture at 2500 revolutions per minute during 60 seconds, followed by exposure of the mixed composition to the indicated temperature during the indicated time as given in Table 1 under exclusion of moisture.

Right after mixing and after each exposure, the consistency of the composition was checked and judged as follows:
"Cured" means, that the composition was a cured elastomer with a non-tacky surface.
"Fluid" means, that there was no cure and the composition was of similar viscosity as the original isocyanate-functional polymer.
"Highly viscous" means, that the composition was not fully cured, but showed a significantly higher viscosity than the original isocyanate-functional polymer. "Tacky" means, that the composition was a cured elastomer with a tacky surface.

The results are given in Table 1.

Reference compositions are marked with "(Ref.)".

**Table 1: Composition and properties of the Compositions C-1 to C-5.**

| **Composition** | **C-1 (Ref.)** | **C-2** | **C-3** | **C-4 (Ref.)** | **C-5 (Ref.)** |
|---|---|---|---|---|---|
| Polymer **P1** | 50.0 | 50.0 | 50.0 | 50.0 | - |
| Polymer **P3** | - | - | - | - | 50.0 |
| **PH-CL** | 0.5 | - | - | - | - |
| **PH-Bz** | - | 0.5 | - | - | - |
| **PH-Sa** | - | - | 0.5 | - | - |
| **PH-Ac** | - | - | - | 0.5 | 0.5 |
| initial | fluid | fluid | fluid | cured | fluid |
| 30 min at 80°C | fluid | cured | cured | cured | highly viscous |
| 1 d at 100°C | fluid | cured | cured | cured | tacky |
| 2 d at 100°C | fluid | cured | cured | cured | tacky |
| 5 d at 100°C | cured | cured | cured | cured | tacky |

Table 1 shows, that the Reference-Composition **C-1** with a phosphonium chloride catalyst did not cure within a reasonable time, whereas the inventive Compositions **C-2** and **C-3** with a phosphonium catalyst with an aromatic carboxylate anion according to the invention cured within 30 minutes at 80 °C to an elastomer with a non-tacky surface. The Reference-Composition **C-4** with a phosphonium catalyst with an aliphatic carboxylate anion cured too fast. It was already cured right after mixing. The Reference-Composition **C-5** based on a polymer with aliphatic isocyanate groups did not cure properly, even with the phosphonium catalyst with an aliphatic carboxylate anion.

### Compositions C-6 to C-12: (suitable for use as shock absorbing elastomer)

For each composition, an Isocyanate Component was prepared by mixing the ingredients as given in Table 2 in the given amounts (weight parts) by means of a planetary mixer under vacuum and exclusion of moisture and stored in a moisture-tight container.

For each composition, a Catalyst Component was prepared by mixing the ingredients as given in Table 2 in the given amounts (weight parts) by means of a planetary mixer under vacuum and exclusion of moisture and stored in a moisture-tight container.

Upon use, the Isocyanate Component and the Catalyst Component were mixed by means of a centrifugal mixer (SpeedMixer^{™} DAC 150, FlackTek Inc.) under exclusion of moisture at 2500 revolutions per minute during 60 seconds, followed by applying the mixed composition for the tests as given below.

To determine the mechanical properties, the mixed composition was applied between two PTFE-coated foils and pressed to a film with a layer thickness of 2 mm by means of two metal plates. The covered film with was then cured in an oven for 30 minutes at 80 °C. The metal plates and the PTFE-coated foils were then removed from the cured film and the film was stored for 24 hours at standard climate conditions, followed by punching dumbbell-shaped samples with a length of 75 mm at a bridge length of 30 mm and a bridge width of 4 mm. With the so-prepared samples, the **tensile strength,** the **elongation** (at break) the **e-modulus 5%** (modulus of elasticity from 0.5 to 5% elongation) and the **e-modulus 100%** (modulus of elasticity from 0.5 to 100% elongation) were determined according to DIN EN 53504 at a crosshead speed of 200 mm/min.

The **dimensional stability** after compression at 70 °C was determined based on DIN ISO 815-1 (determination of compression set). For this test, several test samples were prepared by applying the mixed composition into a cylindrical mold with a diameter of 13 mm and a height of 6 mm. The surface was covered with a metal lid and the samples were cured in an oven for 30 minutes at 80 °C, then removed from the mold and stored at standard climate conditions for 24 hours. The exact height (thickness) of each cylindrical sample was then measured, followed by compressing the sample by 25 % in height (i.e. to a height which was 75 % of the initial height) by means of a press with two metal plates held together by 4 screws. The compressed samples were then stored in an oven at 70 °C for 94 hours. After cooling of the samples to room temperature, the compression was released, which allowed the cylindrical samples to recover. After a waiting time of 30 min at standard climate conditions, the recovered height was measured and the **deformation** was calculated in % by dividing the loss in height (i.e. initial height minus recovered height) based on the compressed height (i.e. 25 % of the initial height).

The results are given in Table 2.

Reference compositions are marked with **"(Ref.)".**

**Table 2: Composition and properties of Compositions C-6 to C-12.**

| **Composition** | | **C-6** | **C-7 (Ref.)** | **C-8 (Ref.)** |
|---|---|---|---|---|
| **Isocyanate Component:** | | | | |
| | Polymer | **P1** 60.5 | **P1** 60.5 | **P1** 60.5 |
| | HDI-trimer ¹ | - | - | - |
| | fumed silica | 0.5 | 0.5 | 0.5 |
| | carbon black ² | 34.5 | 34.5 | 34.5 |
| | diisodecylphthalate | 4.5 | 4.5 | 4.5 |

| **Catalyst Component:** | | | | |
|---|---|---|---|---|
| | Catalyst | **PH-Bz** 0.5 | **AM-Fo** 0.2 | **AM-Ac** 0.25 |
| | polyoxypropylene diol ³ | 6.8 | 7.1 | 7.05 |
| | molecular sieve ⁴ | 0.2 | 0.2 | 0.2 |
| | carbon black ² | 2.5 | 2.5 | 2.5 |

| **30 min at** 80°C: | | | | |
|---|---|---|---|---|
| | tensile strength [MPa] | 7.4 | 7.5 | 6.1 |
| | elongation [%] | 172 | 191 | 165 |
| | e-modulus 5% [MPa] | 6.0 | 4.2 | 4.3 |
| | e-modulus 100% [MPa] | 4.4 | 3.7 | 3.5 |
| **dimensional stability** after compression at 70°C: | | | | |
| | deformation | 15 % | 31 % | 48 % |

| | | | | |
|---|---|---|---|---|
| ¹ Desmodur^{®} N 3300 (from Covestro) ² Monarch^{®} 120 (from Cabot) ³ Acclaim^{®} 12200 (from Covestro) ⁴ Purmol^{®} 3 ST (from Zeochem) | | | | |

**Table 2: (continued)**

| **Composition** | | **C-9** | **C-10 (Ref.)** | **C-11 (Ref.)** | **C-12 (Ref.)** |
|---|---|---|---|---|---|
| **Isocyanate Component:** | | | | | |
| | Polymer | **P2** 59.5 | **P2** 59.5 | **P2** 59.5 | **P2** 59.5 |
| | HDI-trimer ¹ | 1.0 | 1.0 | 1.0 | 1.0 |
| | fumed silica | 0.5 | 0.5 | 0.5 | 0.5 |
| | carbon black ² | 34.5 | 34.5 | 34.5 | 34.5 |
| | diisodecylphthalate | 4.5 | 4.5 | 4.5 | 4.5 |

| **Catalyst Component:** | | | | | |
|---|---|---|---|---|---|
| | Catalyst | **PH-Bz** 0.5 | **AM-Fo** 0.5 | **AM-Fo** 0.2 | **AM-Ac** 0.25 |
| | polyoxypropylene diol ³ | 6.8 | 6.8 | 7.1 | 7.05 |
| | molecular sieve ⁴ | 0.2 | 0.2 | 0.2 | 0.2 |
| | carbon black ² | 2.5 | 2.5 | 2.5 | 2.5 |

| **30 min** 80°C: | | | | | |
|---|---|---|---|---|---|
| | tensile strength [MPa] | 8.2 | 7.8 | 7.5 | 7.3 |
| | elongation [%] | 189 | 225 | 176 | 183 |
| | e-modulus 5% [MPa] | 6.2 | 4.6 | 5.9 | 5.0 |
| | e-modulus 100% [MPa] | 4.8 | 3.6 | 4.5 | 3.9 |
| **dimensional stability** after compression at 70°C: | | | | | |
| | deformation | 41 % | 76 % | 62 % | 73 % |

Tabel 2 shows, that the inventive Composition **C-6** based on Polymer **P1** had a much better dimensional stability than the corresponding Reference-Compositions **C-7** und **C-8.** Also the inventive Composition **C-9** based on Polymer **P2** showed a much better dimensional stability than the corresponding Reference-Compositions **C-10** to **C-12.**

## Claims

1. Use of a catalyst containing at least one phosphonium cation and at least one aromatic carboxylate anion for the curing of an isocyanate-functional polymer with aromatic isocyanate groups and an NCO-content based on the total polymer of 0.5 to 5 weight-% by trimerisation of the isocyanate groups.

2. Use according to claim 1, wherein the phosphonium cation comprises a minimum of 22 carbon atoms, preferably a minimum of 24 carbon atoms, more preferably a minimum of 26 carbon atoms.

3. Use according to claim 1 or 2, wherein the phosphonium cation is a phosphonium cation of the formula (I), 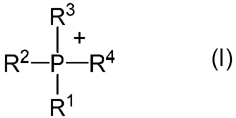 wherein R¹, R², R³ and R⁴ each individually is a monovalent C₁ to C₂₀ alkyl, cycloalkyl or aryl group, whereby R¹, R², R³ and R⁴ together contain 22 to 60 carbon atoms, preferably 24 to 50 carbon atoms, particularly 26 to 40 carbon atoms.

4. Use according to any one of claims 1 to 3, wherein the phosphonium cation is selected from the list consisting of tributyl-decylphosphonium, tributyl-dodecylphosphonium, tributyl-tetradecylphosphonium, tributyl-octadecylphosphonium, tetrahexylphosphonium, trihexyl-octylphosphonium, trihexyl-decylphosphonium, trihexyl-dodecylphosphonium, trihexyl-tetradecylphosphonium, trihexyl-hexadecylphosphonium, trihexyl-octadecylphosphonium, tetraoctylphosphonium, trioctyl-decylphosphonium, trioctyl-dodecylphosphonium, trioctyl-tetradecylphosphonium, trioctyl-hexadecylphosphonium and trioctyl-octadecylphosphonium.

5. Use according to any one of claims 1 to 4, wherein the aromatic carboxylate anion is selected from the list consisting of benzoate, the isomeric hydroxybenzoates, the isomeric dihydroxybenzoates, 2,4,6-trihydroxybenzoate, the isomeric toluates, the isomeric ethylbenzoates, the isomeric isopropylbenzoates, the isomeric dimethylbenzoates, the isomeric vinylbenzoates and the isomeric naphthoates.

6. Use according to any one of claims 1 to 5, wherein the weight ratio between the catalyst and the isocyanate-functional polymer is 0.25/100 to 2.5/100, preferably 0.5/100 to 2/100, more preferably 0.75/100 to 1.5/100.

7. Use according to any one of claims 1 to 6, wherein the isocyanate-functional polymer contains polyether chains.

8. Use according to any one of claims 1 to 7, wherein the isocyanate-functional polymer is liquid at room temperature.

9. Use according to any one of claims 1 to 8, wherein the aromatic isocyanate groups of the isocyanate-functional polymer are from a diphenylmethane diisocyanate, preferably from 4,4'-diphenylmethane diisocyanate.

10. Use according to any one of claims 1 to 9, wherein the NCO-content of the isocyanate-functional polymer is 0.7 to 4 weight-%, preferably 1 to 3.5 % weight-%, particularly 1.5 to 3 % weight-%, based on the total polymer.

11. Use according to any one of claims 1 to 10, wherein the curing is done by mixing the catalyst and the isocyanate-functional polymer, preferably followed by heating the mixture to a temperature above 40 °C, particularly above 60 °C.

12. Curable composition comprising the catalyst and the isocyanate-functional polymer as described in any one of claims 1 to 11, and at least one further ingredient selected from the list consisting of fillers, plasticizers and drying agents.

13. Curable composition according to claim 12 containing based on the total composition
- 40 to 70 weight-% of the isocyanate-functional polymer,
- 20 to 50 weight-% of carbon black,
- 0 to 30 weight-%, preferably 5 to 20 weight-%, of plasticizers, and
- 0.05 to 2 weight-%, preferably 0.1 to 1 weight-%, of the catalyst.

14. Polyisocyanurate elastomer obtained
- from the use according to any one of claims 1 to 11 by mixing the catalyst with the isocyanate-functional polymer, or
- from the curable composition according to claim 12 or 13 by mixing the ingredients,
followed by curing the mixed composition at a temperature of 5 to 140 °C, preferably 15 to 120 °C, more preferably 40 to 100 °C, particularly 60 to 100 °C.

15. Polyisocyanurate elastomer according to claim 14, wherein the deformation after compression at 70 °C of the polyisocyanurate elastomer is less than 50 %, preferably less than 40 %, particularly less than 30 %, determined with a cylindrical sample of 13 mm in diameter and 6 mm in height after compressing the sample by 25 % in height to 4.5 mm at 70 °C for 94 hours, followed by cooling the compressed sample to room temperature, releasing the pressure and measuring the loss in height in % based on the compressed height of 1.5 mm
